# EUROPÄISCHE PATENTSCHRIFT

(11) **EP 1 850 087 B1**
(45) Veröffentlichungstag und Bekanntmachung des Hinweises auf die Patenterteilung: **19.08.2009**
(21) Anmeldenummer: 06008576.8
(22) Anmeldetag: 25.04.2006
(51) Int. Cl.: G01B 7/04, B66B 27/00

(54) **Verfahren und Vorrichtung zum Überwachen der Dehnung einer Antriebskette**
Method and apparatus for monitoring the elongation of a drive chain
Procédé et dispositf destiné à surveiller l'extension d'une chaîne d'entraînement

(43) Veröffentlichungstag der Anmeldung: 31.10.2007
(73) Patentinhaber: Prüftechnik Dieter Busch AG, 85737 Ismaning (DE)
(72) Erfinder: Lösl, Johann, 84172 Buch am Erlbach (DE); Schühle, Roland, 88213 Ravensburg (DE)
(74) Vertreter: Schwan - Schwan - Schorer

(56) Entgegenhaltungen:
- JP-A- 2002 087 750
- US-A- 4 664 247
- PATENT ABSTRACTS OF JAPAN Bd. 014, Nr. 358 (P-1087), 2. August 1990 (1990-08-02) & JP 02 130402 A (NKK CORP), 18. Mai 1990 (1990-05-18)
- PATENT ABSTRACTS OF JAPAN Bd. 2000, Nr. 02, 29. Februar 2000 (2000-02-29) & JP 11 325829 A (SUMITOMO METAL IND LTD), 26. November 1999 (1999-11-26)
- PATENT ABSTRACTS OF JAPAN Bd. 2000, Nr. 13, 5. Februar 2001 (2001-02-05) -& JP 2000 291748 A (HITACHI BUILDING SYSTEMS CO LTD), 20. Oktober 2000 (2000-10-20)

## Beschreibung

Die vorliegende Erfindung betrifft ein Verfahren zum Überwachen der Dehnung einer umlaufenden Antriebskette, die in Eingriff mit einem rotierenden Zahnrad steht. Ferner betrifft die Erfindung ein System mit einer solchen Antriebskette sowie einer Anordnung zum Überwachen der Dehnung der Kette.

Ein Verfahren zum Überwachen der Dehnung einer umlaufenden Antriebskette ist aus der US 5,291,131 bekannt, wobei die Kette mit zwei in Längsrichtung der Kette beabstandeten Markierungen versehen ist und die Überwachungsanordnung zwei in der Bewegungsrichtung der Kette beabstandete Sensoren aufweist, die jeweils den Zeitpunkt des Durchgangs der ersten bzw. der zweiten Markierung an dem jeweiligen Sensor erfassen. Dabei kann aus der Zeitspanne zwischen dem Durchgang beispielsweise der ersten Markierung an dem ersten Sensor und dem zweiten Sensor die Umlaufgeschwindigkeit der Kette bestimmt werden, während aus der Zeitspanne zwischen dem Durchgang der ersten und der zweiten Markierung beispielsweise an dem ersten Sensor unter Berücksichtigung der Umlaufgeschwindigkeit der Kette der Abstand zwischen den beiden Markierungen bestimmt und somit überwacht werden kann. Ähnliche Verfahren sind beispielsweise aus der GB 2 406 843 B, GB 2 406 844 B, US 6,851,546 B2 sowie US 5,563,392 bekannt.

Nachteilig bei solchen Verfahren ist beispielsweise der Umstand, dass sich aus Schwankungen der Drehzahl des Zahnrads ergebende Schwankungen der Umlaufgeschwindigkeit der Kette bei der Messung nicht erkannt werden und somit die Abstandsermittlung verfälschen können.

Aus der JP 2002-087750 A ist ein Verfahren zum Überwachen der Dehnung der Antriebskette einer Fahrtreppe bekannt, wobei einerseits mittels eines ersten Sensors die Drehzahl der Antriebswelle erfasst wird und andererseits mittels eines zweiten Sensors die Durchgangsbewegung von an den Fahrtreppenstufen angebrachten Markierungselementen erfasst wird.

In der US 4,664,247 ist eine Fahrtreppe beschrieben, bei welcher ein Drehzahlsensor vorgesehen ist, der ein synchron mit dem Fahrtreppenantrieb angetriebenes Zahnrad umfasst, welches zwecks Drehzahlerfassung von einem induktiven Sensor abgetastet wird.

Die JP 02-130402 betrifft eine Anordnung zum direkten Messen des Abstands von Kettenelementen einer Antriebskette, um die Längenausdehnung der Kettenglieder zu überwachen, wobei zwei in Abstand bezüglich der Laufrichtung der Kette angeordnete Sensoren vorgesehen sind.

Es ist Aufgabe der vorliegenden Erfindung, ein Verfahren zum Überwachen der Dehnung einer umlaufenden Antriebskette, die in Eingriff mit einem rotierenden Zahnrad steht, zu schaffen, welches eine möglichst gute Genauigkeit der Überwachung liefert und dennoch einfach auszuführen ist. Ferner soll ein entsprechendes überwachtes System geschaffen werden.

Diese Aufgabe wird erfindungsgemäß gelöst durch ein Verfahren gemäß Anspruch 1 sowie einem System gemäß Anspruch 22.

Bei der erfindungsgemäßen Lösung ist dadurch vorteilhaft, dass mittels des zweiten Sensors die Drehbewegung des Zahnrads erfasst wird, indem die Durchgangsbewegung der Zähne des Zahnrads an dem zweiten Sensor erfasst wird, und daraus ein Maß für die Umlaufgeschwindigkeit der Kette ermittelt wird, um diese bei der Ermittlung des Abstands zwischen benachbarten Kettenelementen aus der mittels des ersten Sensors erfaßten Durchgangsbewegung der Kettenelemente zu berücksichtigen, die mittels des ersten Sensors erfasste Durchgangsbewegung der Kettenelemente auf die Drehbewegung des Zahnrads - und damit auf die Umlaufgeschwindigkeit der Kette - normiert werden kann, wodurch eine hinsichtlich der Drehzahl des Zahnrads selbstkalibrierende Messung erzielt wird, so dass sich Drehzahlschwankungen nicht auf das Ergebnis der Abstandsermittlung auswirkt.

Bevorzugte Ausgestaltungen der Erfindung ergeben sich aus den abhängigen Ansprüchen .

Im folgenden wird die Erfindung anhand der beigefügten Zeichnungen beispielhaft näher erläutert. Dabei zeigen:
Fig. 1 eine schematische Ansicht einer mittels einer Überwachungsanordnung überwachten umlaufenden Antriebskette; und
Fig. 2 einen beispielhaften Verlauf der von den beiden Sensoren der Überwachungsanordnung gelieferten Meßsignale.

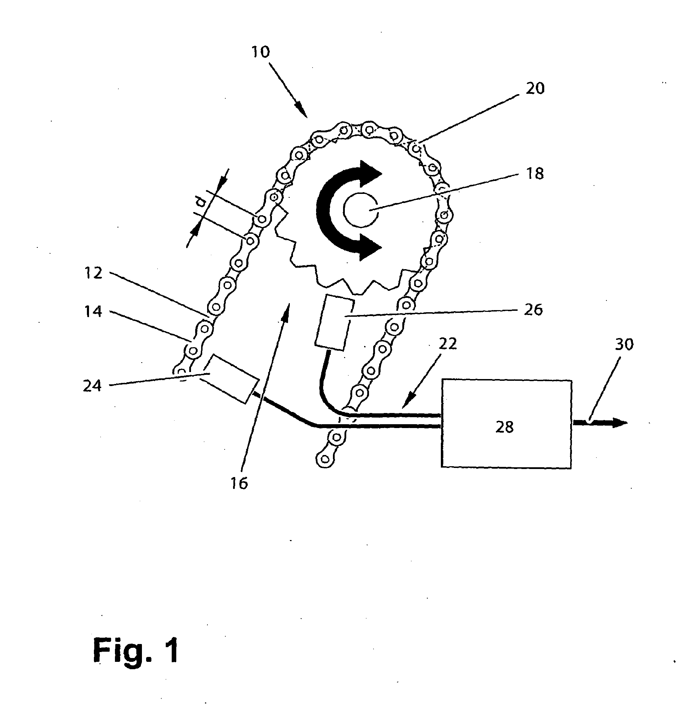

In Fig. 1 ist schematisch ein Teil einer umlaufenden Antriebskette 10 gezeigt, die aus periodisch angeordneten Kettengliedern 12 besteht, die mittels Verbindungsstiften 14 verbunden sind, wobei die Kette 10 in Eingriff mit einem rotierenden Zahnrad 16 steht, welches von einer Welle 18 angetrieben wird. In üblicher Weise sind dabei die Kette 10 und das Zahnrad 16 so aufeinander abgestimmt, dass jeder Zahn 20 des Zahnrads 16 in je eines der Kettenglieder 12 eingreifen kann. Alle Kettenglieder 12 und alle Stifte 14 sind dabei jeweils gleichartig ausgebildet.

Vorzugsweise handelt es sich bei der Kette 10 und dem Zahnrad 16 um einen Teil einer Fahrtreppe.

Ferner ist eine Überwachungsanordnung 22 vorgesehen, welche zwei ortsfest montierte Sensoren 24 und 26 sowie eine Auswertungseinheit 28 umfasst und dazu dient, die Dehnung der Kette 10 (d.h. die Zunahme der Länge aufgrund Verschleiß) im Betrieb dauerhaft zu überwachen, wobei die Auswertungseinheit 28 an ihrem Ausgang 30 ein Alarmsignal abgeben kann, falls eine unzulässig große Dehnung der Kette 10 erkannt worden ist.

Der erste Sensor 24 dient dazu, die Durchgangsbewegung von periodisch über die Länge der Kette 10 angeordneten gleichartigen Kettenelementen, bei denen es sich zweckmäßigerweise um die Stifte 14 handelt, am ersten Sensor 24 zu erfassen, während der zweite Sensor 26 dazu dient, die Durchgangsbewegung der Zähne 20 des Zahnrads 16 an dem zweiten Sensor 26 zu erfassen, um die Drehbewegung des Zahnrads 16 zu erfassen. Die Signale der beiden Sensoren 24 und 26 werden in die Auswertungseinheit 28 eingespeist und dort ausgewertet, wobei mittels der von dem zweiten Sensor 26 erfassten Drehbewegung des Zahnrads 16 ein Maß für die Umlaufgeschwindigkeit der Kette 10 ermittelt wird und aus der mittels des ersten Sensors 24 erfassten Durchgangsbewegung der Stifte 14 unter Berücksichtigung der ermittelten Umlaufgeschwindigkeit der Kette 10 der Abstand zwischen zwei benachbarten Stiften 14 ermittelt wird, um die Dehnung der Kette 10 zu überwachen.

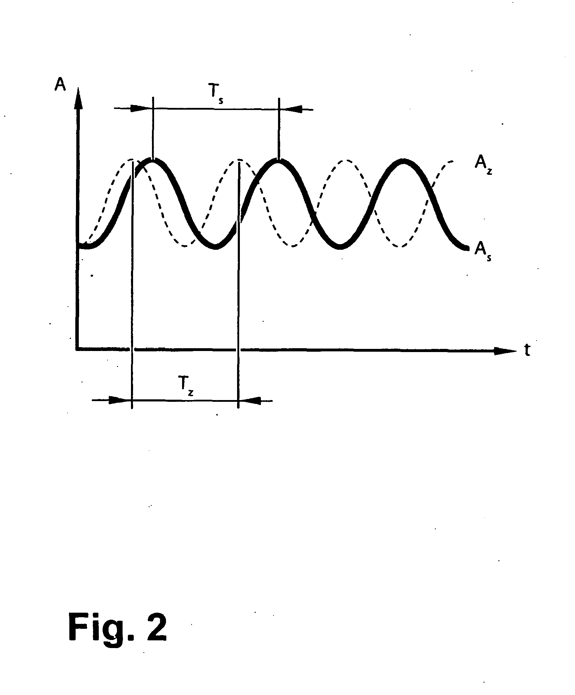

In Fig. 2 ist ein beispielhafter zeitlicher Verlauf für das von dem ersten Sensor 24 ausgegebene Signal A_{S} und das von dem zweiten Sensor 26 ausgegebene Signal A_{Z} gezeigt. Im Verlauf des Signals A_{S} des ersten Sensors 24 zeigt sich der Durchgang eines jeden Stiftes 14 als Berg, wobei der Abstand zweier Berge der Zeitspanne zwischen dem Durchgang zweier benachbarter Stifte 14 an dem ersten Sensor 24 entspricht. Diese Zeitspanne ist in Fig. 2 mit T_{S} bezeichnet. Im Signal A_{Z} des zweiten Sensors 26 zeigt sich der Durchgang eines jeden Zahns 20 ebenfalls als Berg, wobei der Abstand zweier Berge der Zeitspanne T_{Z} zwischen dem Durchgang zweier benachbarter Zähne 20 am zweiten Sensor 26 entspricht. Da die Umlaufgeschwindigkeit der Zähne 20 im wesentlichen der Umlaufgeschwindigkeit der Stifte 14 bzw. der Kettenglieder 12 - und somit der Kette 10 - entspricht (zumindest solange die Drehrichtung des Zahnrads 16 gleich bleibt), ist die Zeitspanne T_{Z} ein Maß für die Umlaufgeschwindigkeit der Kette 10 und kann entsprechend zur Normierung der Zeitspanne T_{S}, die sowohl von der Umlaufgeschwindigkeit der Kette 10 und dem Abstand zweier benachbarter Stifte 14 abhängt, verwendet werden, um ein Meßergebnis zu erhalten, welches bezüglich Drehzahlschwankungen des Zahnrads 16 selbstkalibrierend ist.

Es versteht sich, dass die Signale der Sensoren 24 und 26 in der Praxis nicht den in Fig. 2 dargestellten idealisierten Verlauf haben, sondern zur Auswertung in der Auswertungseinheit 28 mittels A/D-Wandlern vor der Auswertung digitalisiert werden. Vorzugsweise erfolgt die Digitalisierung dergestalt, dass das Signal mit einer Auflösung von mindestens 16 Bit abgetastet wird. Vorzugsweise beträgt die Abtastrate in der Praxis mindestens 30 kHz. Das Signal des zweiten Sensors 26 wird dabei vorzugsweise mit einer zeitlichen Auflösung erfasst, die feiner als 1/500 der Zeitspanne T_{Z} zwischen dem Durchgang zweier benachbarter Zähne 20 ist, wobei ein Wert von mindestens 1/3000 dieser Zeitspanne bevorzugt wird. In ähnlicher Weise sollte das Signal des ersten Sensors 24 mit einer zeitlichen Auflösung erfasst werden, die feiner als 1/500 der Zeitspanne T_{S} zwischen dem Durchgang zweier Stifte 14 ist, wobei ein Wert von mindestens 1/3000 dieser Zeitspanne bevorzugt wird.

Vorzugsweise ist der zweite Sensor 26 in radialer Richtung bezüglich des Außenumfangs des Zahnrads 16 angeordnet, wobei er zwecks Vermeidung von Verschleiß berührungsfrei arbeiten sollte. Dabei kann der zweite Sensor 26 beispielsweise induktiv, optisch oder per Ultraschall arbeiten. Insbesondere kann dabei der Abstand zwischen dem Sensor und dem Außenumfang des Zahnrads 16 erfasst werden, so dass die durch die Zähne 20 bei rotierendem Zahnrad 16 verursachte Niveauschwankung in radialer Richtung von dem Sensor 26 erfasst und in ein entsprechend moduliertes Signal umgesetzt kann, siehe z.B. Fig. 2.

Bei einer alternativen Ausführungsform, die hier nicht gezeigt ist, kann es sich bei dem zweiten Sensor um einen üblichen Drehgeber handeln, der die Drehung des Zahnrads 16 mit einer hinreichenden Auflösung ausgibt.

Zwecks Verschleißminimierung arbeitet auch der erste Sensor 24 vorzugsweise berührungsfrei, beispielsweise induktiv, optisch oder per Ultraschall. Dabei erfasst der erste Sensor 24 beispielsweise den Abstand zwischen dem Sensor 24 und dem zu dem Sensor 24 nächstgelegenen Stift 14.

In der Darstellung von Fig. 1 ist der erste Sensor 24 so angeordnet, dass er im wesentlichen in der von der von der Kette 12 aufgespannten Ebene liegt. Je nach den Einbauverhältnissen bei der Fahrtreppe könnte der erste Sensor 24 jedoch auch senkrecht zu dieser Ebene, d.h. seitlich zu der Kette 10, montiert sein. Dies gilt analog auch für den zweiten Sensor 26, der in der Darstellung von Fig. 1 ebenfalls in der von der Kette 10 aufgespannten Ebene angeordnet ist.

Um die Zeitspanne T_{S} zwischen dem Durchgang zweier benachbarter Stifte 14 mit hinreichender Genauigkeit zu ermitteln, ist es zweckmäßig, beispielsweise mindestens neun aufeinanderfolgende Durchgänge zu berücksichtigen und die mittlere Zeitspanne T_{S} durch Kurvenanpassung an die diskreten Meßwerte des Signals des ersten Sensors 24 zu ermitteln. Um hier ein gutes Ergebnis zu erzielen, ist es erforderlich, wie bereits oben erwähnt, das Signal des ersten Sensors 24 mit hinreichender zeitlicher Auflösung abzutasten. Diese Überlegungen gelten analog auch für die Bestimmung der Zeitspanne T_{Z} zwischen dem Durchgang zweier benachbarter Zähne 20 des Zahnrads 16, wobei auch hier zweckmäßigerweise beispielsweise mindestens neun aufeinander folgende Durchgänge ausgewertet werden sollten, wobei die mittlere Zeitspanne T_{Z} durch Kurvenanpassung ermittelt wird.

Im Beispiel von Fig. 2 ist die Zeitspanne T_{S} zwischen dem Durchgang benachbarter Stifte 14 am ersten Sensor 24 länger als die Zeitspanne T_{Z} zwischen dem Durchgang zweier benachbarter Zähne 20 am zweiten Sensor 26, obwohl die Umlaufgeschwindigkeit der Zähne 20 im wesentlichen der Umlaufgeschwindigkeit der Kette 10 entspricht. Der Grund für diese Abweichung liegt in einer durch Verschleiß bereits erfolgten Dehnung bzw. Verlängerung der Kette 10 (Spiel zwischen benachbarten Kettengliedern), die sich in einem Abstand *d* zwischen benachbarten Stiften 14 im unter Spannung stehenden Teil der Kette 10 äußert, während in dem Bereich der Kette, in welchem diese in Eingriff mit den Zähnen 20 des Zahnrads 16 steht, der Abstand zwischen benachbarten Stiften 14 aufgrund dieses Eingriffs im Rahmen des Spiels verringert ist.

Zusammenfassend läßt sich sagen, dass durch das erfindungsgemäße Verfahren, bei welchem ein Maß für die Umlaufgeschwindigkeit der Kette aus der erfassten Drehbewegung des Zahnrads ermittelt und bei der Auswertung der erfassten Durchgangsbewegung von periodisch über die Länge der Kette angeordneten gleichartigen Kettenelementen (z.B. der Stifte) berücksichtigt wird, ein selbstkalibrierendes Messverfahren geschaffen wird, das insbesondere in seiner Genauigkeit nicht durch Drehzahlschwankungen des Zahnrads beeinträchtigt wird, wobei ohne (absolute) Zeitbasis gearbeitet werden kann und auch auf spezielle Markierungen auf der Kette verzichtet werden kann, da die Bewegung von periodisch über die Länge der Kette angeordneten gleichartigen Kettenelementen (z.B. der Stifte mittels des ersten Sensors erfasst wird.

## Patentansprüche

1. Verfahren zum Überwachen der Dehnung einer umlaufenden Antriebskette (10), die in Eingriff mit einem rotierenden Zahnrad (16) steht und periodisch über die Länge der Kette (10) angeordnete gleichartige Kettenelemente (14) aufweist, wobei mittels eines ersten ortsfesten Sensors (24) die Durchgangsbewegung der Kettenelemente (14) an dem ersten Sensor (24) erfasst wird, wobei mittels eines zweiten Sensors (26) die Drehbewegung des Zahnrads (16) erfasst wird, indem die Durchgangsbewegung der Zähne (20) des Zahnrads (16) an dem zweiten Sensor (26) erfasst wird, wobei aus der mittels des zweiten Sensors (26) erfassten Drehbewegung des Zahnrads (16) ein Maß für die Umlaufgeschwindigkeit der Kette (10) ermittelt wird, und wobei aus der mittels des ersten Sensors (24) erfassten Durchgangsbewegung der Kettenelemente (14) unter Berücksichtigung der Umlaufgeschwindigkeit der Kette (10) der Abstand (d) zwischen benachbarten Kettenelementen (14) ermittelt wird.

2. Verfahren gemäß Anspruch 1, wobei die Durchgangsbewegung der Zähne (20) des Zahnrads (16) an dem zweiten Sensor (26) mit einer zeitlichen Auflösung erfasst wird, die feiner als 1/500 der Zeitspanne (T_{Z}) zwischen dem Durchgang zweier benachbarter Zähne (20) ist.

3. Verfahren gemäß Anspruch 2, wobei die Durchgangsbewegung der Zähne (20) des Zahnrads (16) an dem zweiten Sensor (26) mit einer zeitlichen Auflösung erfasst wird, die feiner als 1/3000 der Zeitspanne (T_{Z}) zwischen dem Durchgang zweier benachbarter Zähne (20) ist.

4. Verfahren gemäß einem der vorhergehenden Ansprüche, wobei der zweite Sensor (26) in radialer Richtung bzgl. des Außenumfangs des Zahnrads (16) angeordnet ist.

5. Verfahren gemäß einem der vorhergehenden Ansprüche, wobei der zweite Sensor (26) berührungsfrei arbeitet.

6. Verfahren gemäß Anspruch 6, wobei der zweite Sensor (26) induktiv, optisch oder per Ultraschall arbeitet.

7. Verfahren gemäß Anspruch 5 oder 6, wobei der zweite Sensor (26) den Abstand zwischen dem Sensor und dem Außenumfang des Zahnrads (16) erfasst.

8. Verfahren gemäß einem der vorhergehenden Ansprüche, wobei aus der mittels des ersten Sensors (24) erfassten Durchgangsbewegung der Kettenelemente (14) die Zeitspanne (Ts) zwischen dem Durchgang zweier benachbarter Kettenelemente (14) an dem ersten Sensor (24) ermittelt wird, und wobei der Abstand (d) zwischen benachbarten Kettenelementen (14) aus dieser Zeitspanne (T_{S}) und der ermittelten Umlaufgeschwindigkeit der Kette (10) berechnet wird.

9. Verfahren gemäß Anspruch 8, wobei die Zeitspanne (T_{S}) zwischen dem Durchgang zweier benachbarter Kettenelemente (14) an dem ersten Sensor (24) unter Berücksichtigung von mindestens neun aufeinander folgenden Durchgängen durch Kurvenanpassung ermittelt wird

10. Verfahren gemäß Anspruch 8, sofern auf Anspruch 2 rückbezogen, wobei aus der mittels des zweiten Sensors (26) erfassten Durchgangsbewegung der Zähne (20) des Zahnrads (16) die Zeitspanne (T_{Z}) zwischen dem Durchgang zweier benachbarter Zähne (20) an dem zweiten Sensor (26) ermittelt wird, um ein Maß für die Umlaufgeschwindigkeit der Kette (10) zu ermitteln, und wobei die ermittelte Zeitspanne (T_{S}) zwischen dem Durchgang zweier benachbarter Kettenelemente (14) auf diese Zeitspanne (T_{Z}) zwischen dem Durchgang zweier benachbarter Zähne (20) normiert wird, um die Umlaufgeschwindigkeit der Kette (10) bei der Ermittlung des Abstands (d) benachbarter Kettenelemente (14) zu berücksichtigen.

11. Verfahren gemäß Anspruch 10, wobei die Zeitspanne (T_{Z}) zwischen dem Durchgang zweier benachbarter Zähne (20) an dem zweiten Sensor (26) unter Berücksichtigung von mindestens neun aufeinander folgenden Durchgängen durch Kurvenanpassung ermittelt wird.

12. Verfahren gemäß einem der vorhergehenden Ansprüche, wobei der erste Sensor (24) berührungsfrei arbeitet.

13. Verfahren gemäß Anspruch 12, wobei der erste Sensor (24) induktiv, optisch oder per Ultraschall arbeitet.

14. Verfahren gemäß Anspruch 12 oder 13, wobei der erste Sensor (24) den Abstand zwischen dem Sensor und dem nächstgelegenen Kettenelement (14) erfasst.

15. Verfahren gemäß einem der vorhergehenden Ansprüche, wobei die Durchgangsbewegung der Kettenelemente (14) an dem ersten Sensor (24) mit einer zeitlichen Auflösung erfasst wird, die feiner als 1/500 der Zeitspanne (Ts) zwischen dem Durchgang zweier benachbarter Kettenelemente (14) ist.

16. Verfahren gemäß Anspruch 15, wobei die Durchgangsbewegung der Kettenelemente (14) an dem ersten Sensor (24) mit einer zeitlichen Auflösung erfasst wird, die feiner als 1/3000 der Zeitspanne (T_{S}) zwischen dem Durchgang zweier benachbarter Kettenelemente (14) ist.

17. Verfahren gemäß einem der vorhergehenden Ansprüche, wobei es sich bei den Kettenelementen um die Stifte (14) handelt, welche benachbarte Kettenglieder (12) verbinden.

18. Verfahren gemäß einem der vorhergehenden Ansprüche, wobei das Signal (A_{S}, A_{Z}) des ersten (24) und/oder zweiten Sensors (26) mit einer Auflösung von mindestens 16 bit abgetastet wird.

19. Verfahren gemäß einem der vorhergehenden Ansprüche, wobei die Abtastrate des Signals (A_{S}, A_{Z}) des ersten (24) und/oder zweiten Sensors (26) mindestens 30 kHz beträgt.

20. Verfahren gemäß einem der vorhergehenden Ansprüche, wobei es sich bei der Kette (10) um einen Teil einer Fahrtreppe handelt.

21. Verfahren gemäß Anspruch 20, wobei das Verfahren im Betrieb der Fahrtreppe ausgeführt wird.

22. System mit einer umlaufenden Antriebskette (10), die in Eingriff mit einem rotierenden Zahnrad (16) steht und periodisch über die Länge der Kette (10) angeordnete gleichartige Kettenelemente (14) aufweist, sowie einer Anordnung (22) zum Überwachen der Dehnung der Kette (10), die einen ersten ortsfesten Sensor (24), einen zweiten ortsfesten Sensor (26) sowie eine Auswertungseinheit (28) aufweist, wobei die Sensoren ausgebildet sind, um mittels des ersten Sensors (24) die Durchgangsbewegung der Kettenelemente (14) an dem ersten Sensor (24) zu erfassen und mittels eines zweiten Sensors (26) die Drehbewegung des Zahnrads (16) zu erfassen, indem die Durchgangsbewegung der Zähne (20) des Zahnrads (16) an dem zweiten Sensor (26) erfasst wird, und wobei die Auswertungseinheit (28) ausgebildet ist, um aus der mittels des zweiten Sensors (26) erfassten Drehbewegung des Zahnrads (16) ein Maß für die Umlaufgeschwindigkeit der Kette (10) zu ermitteln und um aus der mittels des ersten Sensors (24) erfassten Durchgangsbewegung der Kettenelemente (14) unter Berücksichtigung der Umlaufgeschwindigkeit der Kette (10) den Abstand (d) zwischen benachbarten Kettenelementen (14) zu ermitteln.

## Claims

1. Method for monitoring the elongation of a revolving drive chain (10) which engages with a rotating gearwheel (16) and has identical chain elements (14) which are periodically arranged over the length of the chain (10), a first stationary sensor (24) being used to detect the passage movement of the chain elements (14) at the first sensor (24), a second sensor (26) being used to detect the rotational movement of the gearwheel (16) by detecting the passage movement of the teeth (20) of the gearwheel (16) at the second sensor (26), a measure of the rotational speed of the chain (10) being determined from the rotational movement of the gearwheel (16), which is detected using the second sensor (26), and the distance (d) between adjacent chain elements (14) being determined from the passage movement of the chain elements (14), which is detected using the first sensor (24), taking into account the rotational speed of the chain (10).

2. Method according to Claim 1, the passage movement of the teeth (20) of the gearwheel (16) at the second sensor (26) being detected with a temporal resolution which is finer than 1/500 of the period of time (T_{Z}) between the passage of two adjacent teeth (20).

3. Method according to Claim 2, the passage movement of the teeth (20) of the gearwheel (16) at the second sensor (26) being detected with a temporal resolution which is finer than 1/3000 of the period of time (T_{Z}) between the passage of two adjacent teeth (20).

4. Method according to one of the preceding claims, the second sensor (26) being arranged in the radial direction with respect to the outer circumference of the gearwheel (16).

5. Method according to one of the preceding claims, the second sensor (26) operating in a contactless manner.

6. Method according to Claim 6, the second sensor (26) operating inductively, optically or by ultrasound.

7. Method according to Claim 5 or 6, the second sensor (26) detecting the distance between the sensor and the outer circumference of the gearwheel (16).

8. Method according to one of the preceding claims, the period of time (T_{S}) between the passage of two adjacent chain elements (14) at the first sensor (24) being determined from the passage movement of the chain elements (14), which is detected using the first sensor (24), and the distance (d) between adjacent chain elements (14) being calculated from this period of time (T_{S}) and the determined rotational speed of the chain (10).

9. Method according to Claim 8, the period of time (T_{S}) between the passage of two adjacent chain elements (14) at the first sensor (24) being determined taking into account at least nine successive passages by means of curve matching.

10. Method according to Claim 8, if referred back to Claim 2, the period of time (T_{Z}) between the passage of two adjacent teeth (20) at the second sensor (26) being determined from the passage movement of the teeth (20) of the gearwheel (16), which is detected using the second sensor (26), in order to determine a measure of the rotational speed of the chain (10), and the determined period of time (T_{S}) between the passage of two adjacent chain elements (14) being standardized to this period of time (T_{Z}) between the passage of two adjacent teeth (20) in order to take into account the rotational speed of the chain (10) when determining the distance (d) between adjacent chain elements (14).

11. Method according to Claim 10, the period of time (T_{Z}) between the passage of two adjacent teeth (20) at the second sensor (26) being determined taking into account at least nine successive passages by means of curve matching.

12. Method according to one of the preceding claims, the first sensor (24) operating in a contactless manner.

13. Method according to Claim 12, the first sensor (24) operating inductively, optically or by ultrasound.

14. Method according to Claim 12 or 13, the first sensor (24) detecting the distance between the sensor and the nearest chain element (14).

15. Method according to one of the preceding claims, the passage movement of the chain elements (14) at the first sensor (24) being detected with a temporal resolution which is finer than 1/500 of the period of time (T_{S}) between the passage of two adjacent chain elements (14).

16. Method according to Claim 15, the passage movement of the chain elements (14) at the first sensor (24) being detected with a temporal resolution which is finer than 1/3000 of the period of time (T_{S}) between the passage of two adjacent chain elements (14).

17. Method according to one of the preceding claims, the chain elements being the pins (14) which connect adjacent chain links (12).

18. Method according to one of the preceding claims, the signal (A_{S}, A_{Z}) from the first sensor (24) and/or from the second sensor (26) being sampled with a resolution of at least 16 bits.

19. Method according to one of the preceding claims, the sampling rate of the signal (A_{S}, A_{Z}) from the first sensor (24) and/or from the second sensor (26) being at least 30 kHz.

20. Method according to one of the preceding claims, the chain (10) being part of an escalator.

21. Method according to Claim 20, the method being carried out during operation of the escalator.

22. System having a revolving drive chain (10), which engages with a rotating gearwheel (16) and has identical chain elements (14) which are periodically arranged over the length of the chain (10), and an arrangement (22) for monitoring the elongation of the chain (10), which arrangement has a first stationary sensor (24), a second stationary sensor (26) and an evaluation unit (28), the sensors being designed to detect the passage movement of the chain elements (14) at the first sensor (24) using the first sensor (24) and to detect the rotational movement of the gearwheel (16) using a second sensor (26) by detecting the passage movement of the teeth (20) of the gearwheel (16) at the second sensor (26), and the evaluation unit (28) being designed to determine a measure of the rotational speed of the chain (10) from the rotational movement of the gearwheel (16), which is detected using the second sensor (26), and to determine the distance (d) between adjacent chain elements (14) from the passage movement of the chain elements (14), which is detected using the first sensor (24), taking into account the rotational speed of the chain (10).

## Revendications

1. Procédé destiné à surveiller l'extension d'une chaîne d'entraînement en mouvement (10), qui est en prise avec une roue dentée rotative (16) et qui présente des éléments de chaîne (14) identiques disposés sur la longueur de la chaîne (10) de manière périodique, le mouvement de passage des éléments de chaîne (14) sur un premier capteur fixe (24) étant détecté au moyen dudit premier capteur (24), le mouvement de rotation de la roue dentée (16) étant détecté au moyen d'un deuxième capteur (26), en détectant le mouvement de passage des dents (20) de la roue dentée (16) sur ledit deuxième capteur (26), une mesure pour la vitesse périphérique de la chaîne (10) étant déterminée à partir du mouvement de rotation de la roue dentée (16) détecté au moyen du deuxième capteur (26), et la distance (d) entre des éléments de chaîne adjacents (14) étant déterminée à partir du mouvement de passage des éléments de chaîne (14) détecté au moyen du premier capteur (24) en tenant compte de la vitesse de rotation de la chaîne (10).

2. Procédé selon la revendication 1, dans lequel le mouvement de passage des dents (20) de la roue dentée (16) sur le deuxième capteur (26) est détecté avec une résolution dans le temps qui est plus fine que 1/500e de l'intervalle de temps (T_{Z}) entre le passage de deux dents adjacentes (20).

3. Procédé selon la revendication 2, dans lequel le mouvement de passage des dents (20) de la roue dentée (16) sur le deuxième capteur (26) est détecté avec une résolution dans le temps qui est plus fine que 1/3000e de l'intervalle de temps (T_{Z}) entre le passage de deux dents adjacentes (20).

4. Procédé selon l'une quelconque des revendications précédentes, dans lequel le deuxième capteur (26) est disposé dans la direction radiale par rapport à la périphérie extérieure de la roue dentée (16).

5. Procédé selon l'une quelconque des revendications précédentes, dans lequel le deuxième capteur (26) fonctionne sans contact.

6. Procédé selon la revendication 5, dans lequel le deuxième capteur (26) fonctionne par induction, optiquement ou par ultrasons.

7. Procédé selon la revendication 5 ou 6, dans lequel le deuxième capteur (26) détecte la distance entre le capteur et la périphérie extérieure de la roue dentée (16).

8. Procédé selon l'une quelconque des revendications précédentes, dans lequel l'intervalle de temps (T_{S}) entre le passage de deux éléments de chaîne adjacents (14) sur le premier capteur (24) est déterminé à partir du mouvement de passage des éléments de chaîne (14) détecté au moyen du premier capteur (24), et dans lequel la distance (d) entre des éléments de chaîne adjacents (14) est calculée à partir de cet intervalle de temps (T_{S}) et de la vitesse périphérique déterminée de la chaîne (10).

9. Procédé selon la revendication 8, dans lequel l'intervalle de temps (T_{S}) entre le passage de deux éléments de chaîne adjacents (14) sur le premier capteur (24) est déterminé en tenant compte d'au moins neuf passages successifs par adaptation à une courbe.

10. Procédé selon la revendication 8, dans la mesure où elle se rapporte à la revendication 2, dans lequel l'intervalle de temps (T_{Z}) entre le passage de deux dents adjacentes (20) sur le deuxième capteur (26) est déterminé à partir du mouvement de passage des dents (20) de la roue dentée (16) détecté au moyen du deuxième capteur (26), afin de déterminer une mesure de la vitesse périphérique de la chaîne (10), et dans lequel l'intervalle de temps déterminé (T_{S}) entre le passage de deux éléments de chaîne adjacents (14) pendant cet intervalle de temps (T_{Z}) entre le passage de deux dents adjacentes (20) est normé, afin de tenir compte de la vitesse périphérique de la chaîne (10) lors de la détermination de la distance (d) entre des éléments de chaîne adjacents (14).

11. Procédé selon la revendication 10, dans lequel l'intervalle de temps (T_{Z}) entre le passage de deux dents adjacentes (20) sur le deuxième capteur (26) est déterminé en tenant compte d'au moins neuf passages successifs par adaptation à une courbe.

12. Procédé selon l'une quelconque des revendications précédentes, dans lequel le premier capteur (24) fonctionne sans contact.

13. Procédé selon la revendication 12, dans lequel le premier capteur (24) fonctionne par induction, optiquement ou par ultrasons.

14. Procédé selon la revendication 12 ou 13, dans lequel le premier capteur (24) détecte la distance entre le capteur et l'élément de chaîne suivant immédiat (14).

15. Procédé selon l'une quelconque des revendications précédentes, dans lequel le mouvement de passage des éléments de chaîne (14) sur le premier capteur (24) est détecté avec une résolution dans le temps qui est plus fine que 1/500e de l'intervalle de temps (T_{S}) entre le passage de deux éléments de chaîne adjacents (14).

16. Procédé selon la revendication 15, dans lequel le mouvement de passage des éléments de chaîne (14) sur le premier capteur (24) est détecté avec une résolution dans le temps qui est plus fine que 1/3000e de l'intervalle de temps (T_{S}) entre le passage de deux éléments de chaîne adjacents (14).

17. Procédé selon l'une quelconque des revendications précédentes, dans lequel les éléments de chaîne sont des goupilles (14) qui relient des maillons de chaîne adjacents (12).

18. Procédé selon l'une quelconque des revendications précédentes, dans lequel le signal (A_{S}, A_{Z}) du premier (24) et/ou du deuxième (26) capteur est balayé avec une résolution d'au moins 16 bits.

19. Procédé selon l'une quelconque des revendications précédentes, dans lequel la vitesse de balayage du signal (A_{S}, A_{Z}) du premier (24) et/ou du deuxième (26) capteur vaut au moins 30 kHz.

20. Procédé selon l'une quelconque des revendications précédentes, dans lequel la chaîne (10) est une partie d'un escalier roulant.

21. Procédé selon la revendication 20, dans lequel le procédé est réalisé au cours du fonctionnement de l'escalier roulant.

22. Système comprenant une chaîne d'entraînement en mouvement (10), qui est en prise avec une roue dentée rotative (16) et qui présente des éléments de chaîne (14) identiques disposés sur la longueur de la chaîne (10) de manière périodique, ainsi qu'un agencement (22) destiné à surveiller l'extension de la chaîne (10), qui présente un premier capteur fixe (24), un deuxième capteur fixe (26) ainsi qu'une unité d'analyse (28), les capteurs étant réalisés pour détecter au moyen du premier capteur (24) le mouvement de passage des éléments de chaîne (14) sur le premier capteur (24) et pour détecter au moyen d'un deuxième capteur (26) le mouvement de rotation de la roue dentée (16), en détectant le mouvement de passage des dents (20) de la roue dentée (16) sur le deuxième capteur (26), et dans lequel l'unité d'analyse (28) est réalisée de façon à déterminer, à partir du mouvement de rotation de la roue dentée (16) détecté au moyen du deuxième capteur (26), une mesure de la vitesse périphérique de la chaîne (10) et à déterminer à partir du mouvement de passage des éléments de chaîne (14) détecté au moyen du premier capteur (24), la distance (d) entre des éléments de chaîne adjacents (14), en tenant compte de la vitesse périphérique de la chaîne (10).
